# FASCICULE DE BREVET EUROPEEN

(11) **EP 3 053 327 B1**
(45) Date de publication et mention de la délivrance du brevet: **28.10.2020**
(21) Numéro de dépôt: 14777736.1
(22) Date de dépôt: 11.09.2014
(51) Int. Cl.: H04L 29/12, H04L 12/18

(54) **PROCÉDÉ DE DIFFUSION D'IDENTIFIANTS DE SOURCES MULTICAST**
VERFAHREN ZUR VERTEILUNG VON KENNZEICHNERN VON MULTICASTQUELLEN
METHOD OF DISTRIBUTING IDENTIFIERS OF MULTICAST SOURCES

(30) Priorité: 01.10.2013 FR 1359509
(43) Date de publication de la demande: 10.08.2016
(73) Titulaire: ORANGE, 75015 Paris (FR)
(72) Inventeur: LEMOINE, Benoît, 22300 Ploubezre (FR)
(86) Numéro de dépôt international: PCT/FR2014/052261
(87) Numéro de publication internationale: WO 2015/049432

(56) Documents cités:
- US-A1- 2011 072 148
- HANDLEY ACIRI C PERKINS USC/ISI E WHELAN UCL M: "Session Announcement Protocol; rfc2974.txt", 20001001, 1 octobre 2000 (2000-10-01), XP015008757, ISSN: 0000-0003
- HANDLEY V JACOBSON ISI/LBNL M: "SDP: Session Description Protocol; rfc2327.txt", 19980401, 1 avril 1998 (1998-04-01), XP015008111, ISSN: 0000-0003
- SCHULZRINNE COLUMBIA UNIVERSITY S CASNER PACKET DESIGN R FREDERICK BLUE COAT SYSTEMS INC V JACOBSON PACKET DESIGN H: "RTP: A Transport Protocol for Real-Time Applications; rfc3550.txt", 20030701, 1 juillet 2003 (2003-07-01), XP015009332, ISSN: 0000-0003
- SCHULZRINNE COLUMBIA UNIVERSITY S CASNER PACKET DESIGN R FREDERICK BLUE COAT SYSTEMS INC V JACOBSON PACKET DESIGN H: "RTP: A Transport Protocol for Real-Time Applications; rfc3550.txt", RTP: A TRANSPORT PROTOCOL FOR REAL-TIME APPLICATIONS; RFC3550.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 July 2003 (2003-07-01), XP015009332,

## Description

### 1. Domaine de l'invention

La demande d'invention se situe dans le domaine des groupes de diffusion de flux de données multicast.

Plus précisément, la demande d'invention concerne la diffusion des identifiants de sources dans les groupes de diffusion multicast bidirectionnels.

### 2. Etat de la technique antérieure

Les services mettant en œuvre le transport multicast dans les réseaux IP (Internet Protocol) se sont d'abord limités à la diffusion de paquets en provenance d'un serveur multicast à destination de clients multicast. Ainsi dans le cas de la diffusion de la télévision sur Internet, le serveur de tête de réseau est soit contrôlé par l'opérateur, soit contrôlé par un fournisseur de contenus avec lequel l'opérateur a des accords, ce qui lui permet de maîtriser la qualité de service jusqu'au client.

Le mode de transport multicast est à présent utilisé non plus seulement dans le sens descendant d'un serveur vers des clients multicast, mais aussi dans le sens remontant, en permettant à chaque client multicast d'émettre des paquets IP multicast à destination du groupe multicast via le réseau de transport.

Afin de limiter le nombre de flux multicast reçus par un client multicast, ce dernier peut demander au réseau à recevoir des flux multicast en spécifiant en plus de l'adresse IP du groupe multicast la ou les adresses IP sources à autoriser ou à exclure par exemple à l'aide du protocole IGMPv3 (Internet Group Management Protocol, ou protocole de gestion de groupe Internet) défini dans le standard IETF RFC 3376 (Internet Engineering Task Force, Request For Comments) ou du protocole MLDv2 (Multicast Listener Discovery, ou découverte d'auditeur en multidiffusion) défini dans le standard IETF RFC 3810.

Lorsqu'un client multicast s'abonne à un flux multicast émis par un autre client ou par un serveur, cela signifie que l'adresse IP de cet autre client ou du serveur est spécifiée dans une demande de réception de flux multicast.

Cependant, tant qu'un client multicast ne reçoit pas de paquet IP en provenance d'autres clients multicast abonnés au même groupe, il ne peut pas connaître leur adresse IP.

Lorsqu'un client devient membre d'une session RTP (Real-time Transfer Protocol, ou protocole de contrôle des transferts en temps réel) telle que définie par la norme IETF RFC 3550 en s'abonnant à un groupe de diffusion multicast, il doit de plus annoncer à la session RTP un identifiant, appelé SSRC (Synchronisation SouRCe, ou source de synchronisation), qui lui est propre, au risque qu'il soit identique à celui d'un autre client déjà abonné avant lui à ce groupe multicast.

La norme IETF RFC 3550 prévoit donc que lorsqu'un client détecte, dans un paquet reçu en provenance du groupe multicast, un tel identifiant SSRC, il doit immédiatement modifier son propre identifiant SSRC s'il est identique.

Cependant, tant qu'un client multicast ne reçoit pas de paquet IP en provenance d'autres clients multicast abonnés au même groupe, il ne peut pas non plus recevoir l'annonce de l'identifiant SSRC de ces autres clients multicast.

Un problème survient du fait que tant que cette détection n'est pas faite, l'utilisation d'un même identifiant par plusieurs clients entraîne des conflits dégradant la qualité de la diffusion multicast.

De plus, comme la norme suppose qu'un identifiant SSRC détecté dans un paquet en provenance du groupe multicast est forcément l'identifiant SSRC d'un client autre que celui qui a reçu le paquet, si pour une raison quelconque un identifiant SSRC revient à son client d'origine dans un paquet, celui-ci le modifie inutilement.

Un des buts de l'invention est de remédier à ces inconvénients de l'état de la technique.

### 3. Exposé de l'invention

L'invention vient améliorer la situation à l'aide d'un procédé de diffusion d'identifiants conforme à la revendication 1.

Grâce au procédé de diffusion d'identifiants selon l'invention, une source d'un groupe multicast peut recevoir le contenu des messages d'annonce multicast émis par une autre source sans avoir besoin de s'abonner à cette autre source en particulier. Il suffit que la source soit abonnée au serveur. Un message d'annonce indique soit une arrivée de la source dans le groupe multicast, soit un départ, et, par exemple, utilise respectivement un message de type RTCP SDES (Source DEScription, ou description de source) ou de type RTCP BYE (bye, ou au revoir). Selon la technique antérieure telle que décrite dans la norme RFC 3550, le serveur qui reçoit de tels messages ne les retransmet jamais vers l'adresse du groupe multicast, mais uniquement vers des adresses unicast ou des adresses multicast d'autres groupes multicast, car cette norme force un client à modifier immédiatement son identifiant s'il le reçoit dans un message émis vers le groupe multicast.

Selon un aspect du procédé de diffusion selon l'invention, lorsque le message d'annonce multicast reçu lors de l'étape de réception comprend une information d'arrivée de la source annonceuse dans le groupe multicast, l'étape de réception est suivie des étapes suivantes:
- obtention d'une adresse de la source annonceuse,
- vérification de la présence de l'identifiant de la source annonceuse dans une table de couples { identifiant de source ; adresse de source },
- en cas de vérification négative, ajout d'un couple { identifiant de la source annonceuse ; adresse de la source annonceuse} dans la table,
et le message de gestion émis lors de l'étape d'émission comprend au moins un couple de la table, comprenant l'identifiant de source annonceuse.

Grâce cet aspect, le serveur multicast peut communiquer un couple { identifiant de source ; adresse de source } correspondant à une source nouvellement arrivée dans le groupe multicast, à toutes les sources du groupe multicast sans que celles-ci n'aient besoin de s'abonner préalablement à d'autre source que le serveur.

Lors de l'étape d'obtention, l'adresse de la source annonceuse est extraite soit des champs du message d'annonce reçu, soit des champs du paquet IP encapsulant le message d'annonce reçu.

Lors de l'étape de vérification, la table des couples permet au serveur de détecter et de signaler les doublons entre identifiants de source. En effet, un identifiant de source, par exemple un identifiant SSRC, doit être unique dans un groupe multicast, et une source qui ne s'abonne qu'au flux multicast émis par le serveur ne connait pas les identifiants SSRC déjà utilisés et peut fort bien s'attribuer un identifiant déjà pris, ce qui entraine une dégradation de la qualité de la diffusion multicast vers les sources en conflit.

Si le serveur détecte que l'identifiant reçu est déjà présent dans la table des couples { identifiant SSRC ; adresse IP }, cela signifie que la source qui vient de s'abonner a choisi un identifiant déjà pris par une autre source. Dans ce cas, le nouveau couple { identifiant de la source annonceuse ; adresse de la source annonceuse } n'est pas ajouté, et c'est l'ancien couple, avec l'adresse de la source abonnée avant la source annonceuse, qui sera émis dans le message de gestion.

L'information d'arrivée est par exemple le champ PT (Payload Type, ou type de donnée utile) d'un message RTCP, qui prend la valeur 202, indiquant également que le message d'annonce est un message RTCP de type SDES.

Le message de gestion émis peut ne comprendre qu'un seul couple, auquel cas le message de gestion émis est par exemple un autre message RTPC SDES.

Aussi grâce à cet aspect du procédé de diffusion selon l'invention, le serveur multicast peut communiquer dans un seul message de gestion plusieurs couples { identifiant de source ; adresse de source } de sa table, éventuellement tous les couples de sa table, à toutes les sources du groupe multicast sans que celles-ci n'aient besoin de s'abonner préalablement à d'autre source que le serveur. Ainsi, une source qui ne s'abonne qu'au flux multicast émis par le serveur connait les identifiants SSRC déjà utilisés, ce qui facilitera son choix dans le cas où il doit modifier son propre identifiant.

Un tel message de gestion émis peut par exemple prendre la forme d'un message RTCP SDES agrégeant plusieurs couples { identifiant de source ; adresse de source} dans un seul et même message RTCP SDES.

Selon un aspect du procédé de diffusion selon l'invention, lorsque le message d'annonce multicast comprend une information de départ de la source annonceuse du groupe multicast, l'étape de réception est suivie d'une étape de retrait, dans table de couples { identifiant de source ; adresse de source }, du couple correspondant à l'identifiant de la source annonceuse.

Grâce à cet aspect, la table de couples { identifiant de source ; adresse de source} reste mise à jour, lors du départ d'une source du groupe multicast.

L'information de départ est par exemple le champ PT d'un message RTCP, qui prend la valeur 203, indiquant également que le message d'annonce est un message RTCP de type BYE.

Le message de gestion émis est par exemple un message RTPC BYE, avec le même identifiant de la source annonceuse.

Selon un autre aspect du procédé de diffusion, lorsque le message d'annonce multicast comprend une information de départ de la source annonceuse du groupe multicast, l'étape de réception est suivie d'une étape d'obtention d'une adresse de la source annonceuse et d'une étape de vérification que l'identifiant de la source annonceuse est bien associé à l'adresse obtenue, dans une table de couples { identifiant de source ; adresse de source }. Si l'identifiant y est associé à une autre adresse, ce couple n'est pas retiré de la table, et est émis dans un message de gestion de type RTCP SDES, au lieu d'un message de type RTCP BYE.

Cette étape de vérification vise à empêcher qu'une source illégitime utilise l'identifiant d'une autre source légitime dans un message d'annonce de départ. L'étape d'émission d'un tel message RTCP SDES présente l'avantage d'informer les deux sources, légitime et illégitime, de la tentative d'utilisation de l'identifiant de la source légitime dans une message d'annonce de départ.

Les différents aspects du procédé de diffusion d'identifiants qui viennent d'être décrits peuvent être mis en œuvre indépendamment les uns des autres ou en combinaison les un avec les autres.

L'invention concerne encore un dispositif de diffusion d'identifiants apte à mettre en oeuvre le procédé de diffusion d'identifiants qui vient d'être décrit, dans tous ses modes de réalisation.

L'invention concerne également un procédé de traitement d'identifiants de sources d'un groupe de diffusion multicast, lesdites sources étant connectées entre elles au travers d'un réseau de communications électroniques, le groupe de diffusion multicast étant identifié par une adresse de groupe, un flux émis à destination de l'adresse de groupe multicast par une première source étant reçu par une seconde source si la seconde source est préalablement abonnée à la première source, une des sources, dite serveur, étant abonnée à toutes les autres sources, une des sources, dite client, s'étant abonnée au serveur et ne s'étant pas abonnée aux autres sources, et ayant émis à destination de l'adresse de groupe un message d'annonce d'arrivée comprenant un identifiant du client, ledit client comprenant une table associant une adresse à un identifiant de source, le procédé comprenant les étapes suivantes mises en oeuvre par ledit client:
- réception, en provenance du serveur, d'un message de gestion comprenant au moins un identifiant d'une source annonceuse,
- si le message de gestion comprend une information d'arrivée, ajout dans la table d'au moins un couple associant une adresse à l'au moins un identifiant, l'adresse étant comprise et associée dans le message de gestion,
- si le message de gestion comprend une information de départ, retrait d'un couple correspondant { identifiant de la source annonceuse; adresse } de la table.

Grâce au procédé de traitement et à sa table de couples { identifiant de source ; adresse de source }, une source (ledit client) est en mesure d'obtenir l'adresse d'une autre source afin de pouvoir éventuellement s'y abonner, sans avoir à mettre en oeuvre une action particulière, contrairement à la technique antérieure. Plusieurs méthodes existent selon la technique antérieure pour obtenir ces adresses. Une première méthode est d'utiliser un protocole de signalisation comme SIP (Session Initiation Protocol, ou protocole d'initiation de session) utilisé dans la téléphonie pour indiquer aux correspondants l'adresse IP distante à prendre en compte). Une deuxième méthode est de disposer d'un annuaire (enum, base http, etc.), par exemple.

De plus, l'étape de retrait permet à la source de maintenir à jour sa table de couples { identifiant de source ; adresse de source }, lorsqu'une autre source quitte le groupe multicast.

Selon un aspect du procédé de traitement selon l'invention, lorsque le client est la source annonceuse, ledit client possédant une adresse, dite adresse client, le procédé comprend en outre:
- une étape de vérification destinée à vérifier si un couple { identifiant ; adresse } compris dans le message de gestion reçu associe l'identifiant du client à une adresse différente de l'adresse client,
   et, en cas de vérification positive,
- une étape de modification de l'identifiant du client, et
- une étape d'émission, à destination de l'adresse de groupe, d'un nouveau message d'annonce d'arrivée comprenant l'identifiant modifié.

Grâce à cet aspect, une source (ledit client) est en mesure de vérifier, immédiatement après s'être
abonnée au serveur, si l'identifiant qu'elle s'est attribuée est unique, et ce sans avoir besoin d'être abonnée aux autres sources. En effet, puisque le serveur émet des couples { identifiant de source ; adresse de source } de la table dès que le message d'annonce d'arrivée du client est reçu, et puisque ces couples comprennent les identifiants des sources arrivées avant elle, si dans le message de gestion l'identifiant du client est associé à une adresse différente de sa propre adresse, cela signifie que son identifiant était déjà pris par une autre source.

Avantageusement, le client peut alors choisir un nouvel identifiant qui n'est pas déjà présent parmi les couples reçus dans le message de gestion.

L'invention concerne encore un dispositif de traitement d'identifiants apte à mettre en oeuvre le procédé de traitement d'identifiants qui vient d'être décrit, dans tous ses modes de réalisation.

L'invention concerne aussi un équipement serveur d'un groupe de diffusion multicast, l'équipement serveur étant connecté à un réseau de communications électroniques et comprenant un dispositif de diffusion d'identifiants de sources tel que décrit précédemment.

Cet équipement serveur peut être par exemple un serveur de télévision, un serveur de jeux, de visioconférence ou bien encore un serveur de réseau de capteurs.

L'invention concerne aussi un équipement client d'un groupe de diffusion multicast, l'équipement client étant connecté à un réseau de communications électroniques et comprenant un dispositif de traitement d'identifiants de sources tel que décrit précédemment.

Cet équipement client peut être par exemple un terminal d'utilisateur tel qu'un téléphone intelligent (smartphone), une tablette numérique, un ordinateur ou un capteur.

L'invention concerne encore un groupe de diffusion multicast comprenant un équipement serveur et au moins deux équipements clients tel que décrits précédemment, lesdits équipements serveur et clients étant connectés entre eux au travers d'un réseau de communications électroniques.

L'invention concerne aussi un programme d'ordinateur comprenant des instructions pour la mise en œuvre des étapes du procédé de diffusion d'identifiants de sources qui vient d'être décrit, lorsque ce procédé est exécuté par un processeur.

L'invention concerne de plus un support d'enregistrement, lisible par un équipement serveur, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur comprenant des instructions pour la mise en œuvre des étapes du procédé de traitement d'identifiants de sources qui vient d'être décrit, lorsque ce procédé est exécuté par un processeur.

L'invention concerne enfin un support d'enregistrement, lisible par un équipement client, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un groupe de diffusion multicast dans un réseau comprenant plusieurs sources dont un serveur, selon un aspect de l'invention,
- la figure 2 présente un exemple d'enchainement et de mise en oeuvre des étapes du procédé de diffusion d'identifiants de sources et du procédé de traitement d'identifiants de sources, selon un aspect de l'invention,
- la figure 3 présente un exemple de mise en oeuvre, par un serveur, des étapes du procédé de diffusion d'identifiants de sources, selon un aspect de l'invention
- la figure 4 présente un exemple de mise en oeuvre, par un client, des étapes du procédé de traitement d'identifiants de sources, selon un aspect de l'invention,
- la figure 5 présente un exemple de structure d'un dispositif de diffusion d'identifiants de sources, selon un aspect de l'invention,
- la figure 6 présente un exemple de structure d'un dispositif de traitement d'identifiants de sources, selon un aspect de l'invention.

### 5. Description détaillée d'au moins un mode de réalisation de l'invention

Dans la suite de la description, on présente des exemples de plusieurs modes de réalisation de l'invention se basant sur les protocoles de diffusion multicast de l'IETF.

Dans la suite de la description, le mot client désigne une source d'un groupe multicast autre que le serveur de ce groupe multicast.

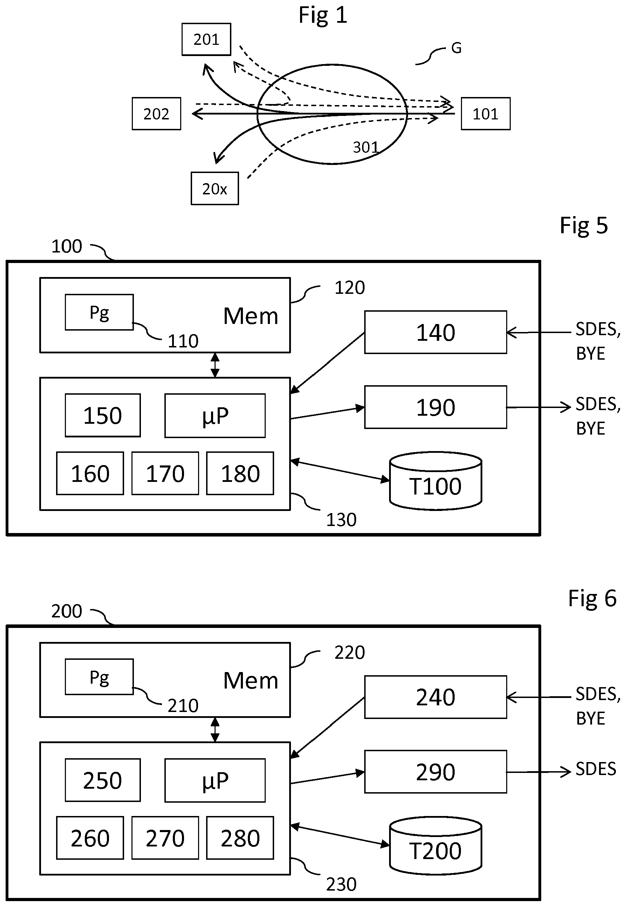

La **figure 1** présente de façon schématique un groupe de diffusion multicast dans un réseau comprenant plusieurs sources dont un serveur, selon un aspect de l'invention.

Dans un tel groupe de diffusion multicast G d'adresse aG, chaque source est connectée à un réseau de communications électroniques 301, généralement un réseau de type IP, et peut émettre des paquets à destination de aG des paquets vers le réseau 301.

Les sources sont soit des clients, tels que les clients 201 à 20x, soit un serveur, tel que le serveur 101.

Au minimum, chaque client 201 à 20x s'abonne au flux multicast d'adresse aG émis par le serveur 101. Tous les clients reçoivent donc tout ce qui est émis par le serveur à destination de aG, comme indiqué par les traits pleins. Un client ne reçoit pas ce qui est émis par un autre client tant qu'il ne s'est pas abonné expressément au flux multicast d'adresse aG émis par cet autre client.

De son côté, le serveur s'abonne aux flux multicast d'adresse aG émis par chacun des clients 201 à 20x. Le serveur reçoit donc tout ce qui est émis par les clients à destination de aG, comme indiqué par les traits pointillés, ce qui lui permet en particulier de recevoir leur trafic RTP respectifs.

Dans un groupe multicast, une source émet des données temps réel, aussi appelées trafic RTP, et des messages de contrôles, aussi appelés messages RTCP. Des paquets RTP sont par exemple diffusés toutes les dix millisecondes, mais les messages de contrôle RTCP sont diffusés avec une fréquence moins élevée, par exemple toutes les secondes.

Lorsqu'il s'abonne au flux multicast d'adresse aG émis par le serveur 101, un client émet immédiatement après un message RTCP SDES vers l'adresse aG. Un tel message SDES comprend l'adresse IP du client, et un identifiant SSRC qu'il s'est attribué pour être reconnu au sein du groupe multicast.

Un message RTCP SDES reçu en provenance d'un client par le serveur permet donc au serveur de faire le lien entre l'adresse IP et l'identifiant SSRC du client. En effet, les messages de type RTCP SDES peuvent comprendre, en plus de l'identifiant SSRC de la source émettrice, un autre identifiant contenant, sous une forme ASCII, l'adresse IPv4 ou IPv6 de cette source.

Selon l'invention, le serveur réémet vers l'adresse aG les messages RTCP SDES reçus des différents clients, ou en agrège leur contenu pour émettre un message RTCP SDES "agrégé" vers l'adresse aG.

Selon l'invention, lorsque le message RTCP SDES reçu d'un client ne contient pas d'adresse IP, le serveur peut ajouter dans le message RTCP SDES l'adresse IP source du paquet IP reçu, contenant le message SDES émis par le client.

Lorsque les clients reçoivent ce message RTCP SDES du serveur, cela leur permet, à eux aussi, de faire le lien entre les adresses IP des autres clients et leur identifiant SSRC respectifs. La connaissance de ce lien est nécessaire pour au moins deux raisons:
1. si un client souhaite s'abonner au flux multicast d'un autre client, par exemple le client 201 au flux multicast d'adresse aG du client 202, il doit connaître l'adresse IP du client 202 ; en effet, une demande d'abonnement au flux d'un client, utilisant par exemple une requête IGMPv3 ou MLDv2, doit préciser l'adresse IP de ce client;
2. un identifiant SSRC doit être unique dans un groupe multicast, et un client qui ne s'est abonné qu'au flux multicast émis par le serveur ne connait pas les identifiants SSRC déjà utilisés et peut fort bien s'attribuer un identifiant déjà pris, ce qui entraine une dégradation de la qualité de la diffusion multicast vers les clients en conflit.

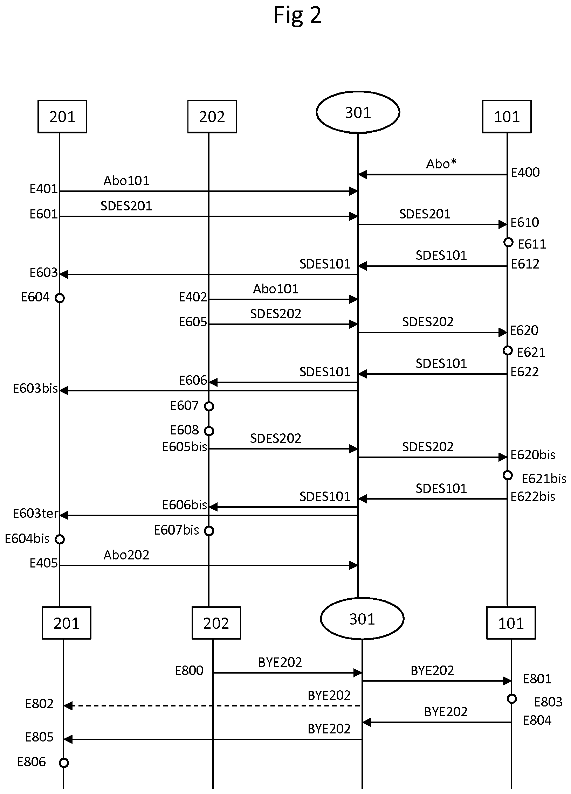

La **figure 2** présente un exemple d'enchainement et de mise en oeuvre des étapes du procédé de diffusion d'identifiants de sources et du procédé de traitement d'identifiants de sources, selon un aspect de l'invention.

Pour des facilités d'illustration, le nombre de clients est réduit à deux dans la figure, avec un premier client 201 souhaitant s'abonner à une seconde source autre que le serveur, et un seul second client 202. Les explications suivantes s'appliquent également au cas où d'autres sources clients 203, 204, etc. font partie du groupe multicast.

Lors d'une étape E400, le serveur 101 s'abonne à l'ensemble des flux à destination de l'adresse multicast aG, en émettant une requête IGMPv3 ou MLDv2 vers le réseau 301, précisant l'adresse aG comme adresse de groupe multicast et n'excluant aucune adresse source.

Lors d'une étape E500 non illustrée, le serveur 101 commence à émettre du trafic RTP à destination de l'adresse multicast aG en utilisant son adresse source S. Aucun des clients 201 ou 202 ne reçoit ce trafic, ou tout autre trafic émis par l'adresse S, tant qu'ils ne se sont pas individuellement abonnés au flux à destination de l'adresse multicast aG émis par l'adresse S.

Lors d'une étape E401, le client 201 s'abonne au flux à destination de l'adresse multicast aG émis par l'adresse S, en émettant une requête IGMPv3 ou MLDv2 vers le réseau 301, précisant l'adresse aG comme adresse de groupe multicast et l'adresse S comme adresse source. Le client 201 commence à recevoir le trafic RTP émis pour le groupe multicast par l'adresse S, c'est à dire par le serveur.

Lors d'une étape E601, le client 201 émet un message RTCP SDES comprenant sa propre adresse IP1 et son propre identifiant multicast SSRC1.

Lors d'une étape E610, le serveur 101 reçoit le message RTCP SDES comprenant le couple { SSRC1 ; IP1 }.

Lors d'une étape E611, le serveur 101 dans sa table T101 vérifie que l'identifiant SSRC1 n'est pas déjà présent en association avec une adresse IP différente d'IP1. Comme ce n'est pas le cas il ajoute dans sa table T101 le couple { SSRC1 ; IP1 }.

Comme aucun autre client n'était abonné au groupe multicast avant le client 101, la table T101 ne contient que le couple { SSRC1 ; IP1 }.

Lors d'une étape E612, le serveur 101 génère et émet un message RTCP SDES, comprenant le couple { SSRC1 ; IP1 }.

Lors d'une étape E603, le client 201 reçoit ce message RTCP SDES.

Lors d'une étape E604, le client 201 vérifie dans le message reçu que son identifiant SSRC1 n'est pas associé à une adresse IP autre que IP1. Comme ce n'est pas le cas, il ajoute dans sa table T201 le couple { SSRC1 ; IP1 }. Alternativement, le client 201 peut remarquer qu'il s'agit de son propre identifiant et de sa propre adresse, et décider de ne pas ajouter dans sa table ce couple qui ne lui apporte aucune information nouvelle.

Lors d'une étape E402, le client 202 s'abonne au flux à destination de l'adresse multicast aG émis par l'adresse S, en émettant une requête IGMPv3 ou MLDv2 vers le réseau 301, précisant l'adresse aG comme adresse de groupe multicast et l'adresse S comme adresse source. Le client 202 commence à recevoir le trafic RTP émis pour le groupe multicast par l'adresse S, c'est à dire par le serveur.

Lors d'une étape E605, le client 202 émet un message RTCP SDES comprenant sa propre adresse IP2 et son propre identifiant multicast SSRC1.

Lors d'une étape E620, le serveur 101 reçoit le message RTCP SDES comprenant le couple { SSRC1 ; IP2 }.

Lors d'une étape E621, le serveur 101 vérifie dans sa table T101 que l'identifiant SSRC1 n'est pas déjà présent en association avec une adresse IP différente d'IP1. Comme c'est le cas, il n'ajoute pas dans sa table T101 le couple { SSRC1 ; IP2 }.

La table T101 ne contient toujours que le couple { SSRC1 ; IP1 }.

Lors d'une étape E622 identique à l'étape E612, le serveur 101 génère et émet un message RTCP SDES, comprenant le couple { SSRC1 ; IP1 }.

Lors d'une étape E603bis identique à l'étape E603, le client 201 reçoit ce message RTCP SDES.

Lors d'une étape E606, le client 202 reçoit aussi ce message RTCP SDES.

Lors d'une étape E607, le client 202 vérifie dans le message reçu que son identifiant SSRC1 n'est pas associé à une adresse IP autre que IP2.

Comme c'est le cas, en plus d'ajouter dans sa table T201 le couple { SSRC1 ; IP1 }, il modifie lors d'une étape E608 son propre identifiant en SSRC2.

Lors d'une étape E605bis, le client 202 émet un message RTCP SDES comprenant sa propre adresse IP2 et son identifiant multicast modifié SSRC2.

Lors d'une étape E620bis, le serveur 101 reçoit le message RTCP SDES comprenant le couple { SSRC2 ; IP2 }.

Lors d'une étape E621bis, le serveur 101 dans sa table T101 vérifie que l'identifiant SSRC2 n'est pas déjà présent en association avec une adresse IP différente d'IP2. Comme ce n'est pas le cas il ajoute dans sa table T101 le couple { SSRC2 ; IP2 }.

La table T101 contient à présent les couples { SSRC1 ; IP1 } et { SSRC2 ; IP2 }.

Lors d'une étape E622bis, le serveur 101 génère et émet un message RTCP SDES, comprenant les couples { SSRC1 ; IP1 } et { SSRC2 ; IP2 }.

Lors d'une étape E603ter, le client 201 reçoit ce message RTCP SDES.

Lors d'une étape E606bis, le client 202 reçoit le même message RTCP SDES.

Lors d'une étape E604bis, le client 201 vérifie dans le message reçu que son identifiant SSRC1 n'est pas associé à une adresse IP autre que IP1. Comme ce n'est pas le cas, il ajoute dans sa table T201 les couples { SSRC1 ; IP1 } et { SSRC2 ; IP2 }. Dans un mode alternatif, le client 201 peut décider de ne pas ajouter dans sa table couple { SSRC1 ; IP1 } qui ne lui apporte aucune information nouvelle.

Lors d'une étape E607bis, le client 202 vérifie dans le message reçu que son identifiant SSRC2 n'est pas associé à une adresse IP autre que IP2. Comme ce n'est pas le cas, il ajoute dans sa table T202 les couples { SSRC1 ; IP1 } et { SSRC2 ; IP2 }. Dans un mode alternatif, le client 202 peut décider de ne pas ajouter dans sa table couple { SSRC2 ; IP2 } qui ne lui apporte aucune information nouvelle.

Lors d'une étape E405, le client 201 s'abonne au flux à destination de l'adresse multicast aG émis par l'adresse IP2 du client 202, en émettant une requête IGMPv3 ou MLDv2 vers le réseau 301, précisant l'adresse aG comme adresse de groupe multicast et l'adresse IP2 comme adresse source. Le client 201 obtient l'adresse IP2 en recherchant parmi les couples dans sa table T201 l'adresse IP correspondant à l'identifiant SSRC2 du client 202.

Le client 201 peut alors commencer à recevoir le trafic RTP émis par le client 202 à destination du groupe multicast d'adresse aG.

Les étapes suivantes décrivent l'enchainement et la mise en oeuvre du procédé de diffusion d'identifiants de sources et du procédé de traitement d'identifiants de sources, selon un aspect de l'invention, lorsque le message d'annonce est un message de départ.

Lors d'une étape E800, le client 202 quitte le groupe multicast et émet un message RTCP BYE à destination de l'adresse multicast aG, comprenant son identifiant SSRC2.

Dans un premier cas, on suppose que le client 201 n'est plus abonné au client 202, et ne reçoit pas le message RTCP BYE.

Lors d'une étape E801, le serveur 101 reçoit le message RTCP BYE comprenant l'identifiant SSRC2.

Lors d'une étape E803, le serveur retire de sa table T101 le couple { identifiant de source ; adresse de source } correspondant à l'identifiant SSRC2, c'est à dire le couple { SSRC2 ; IP2}.

La table T101 ne contient plus que le couple { SSRC1 ; IP1 }.

Lors d'une étape E804, le serveur 101 émet à destination de l'adresse multicast aG un message RTCP BYE, comprenant l'identifiant SSRC2.

Par sécurité, dans une variante, le serveur peut, avant les étapes E803 et E804, vérifier que le message RTCP BYE a bien été émis à partir de l'adresse IP2 correspondant à l'identifiant SSRC2.

Lors d'une étape E805, le client 201 reçoit ce message RTCP BYE.

Lors d'une étape E806, le client 201 retire de sa table T201 le couple { identifiant de source ; adresse de source } correspondant à l'identifiant SSRC2, c'est à dire le couple { SSRC2 ; IP2 }.

La table T201 ne contient plus que le couple { SSRC1 ; IP1 }.

Dans un second cas, on suppose que le client 201 est toujours abonné au client 202, et reçoit aussi, lors d'une étape E802, le message RTCP BYE émis lors de l'étape E800.

Dans ce cas, l'étape E806 est effectuée ensuite, et avant l'étape E805 qui n'a plus d'incidence.

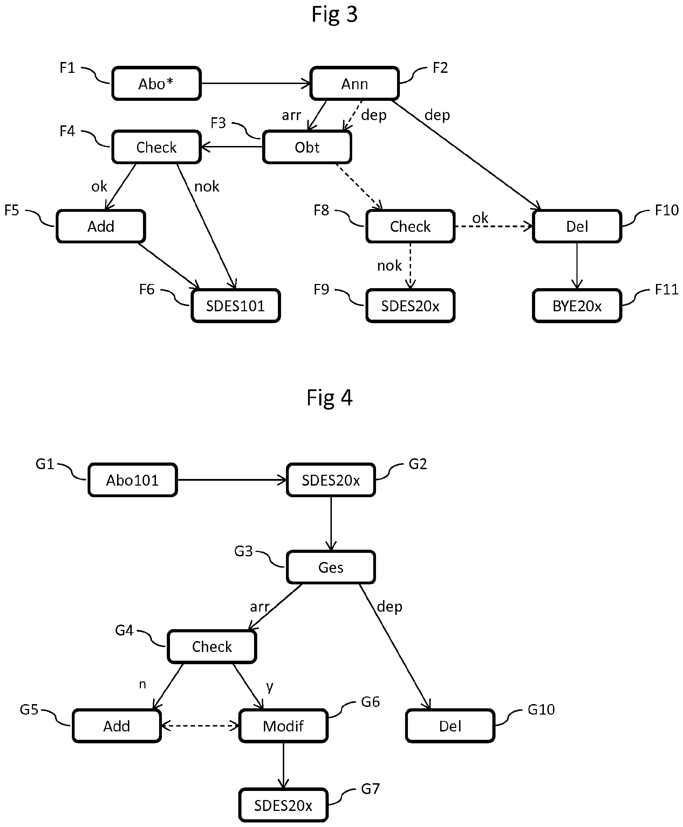

La **figure 3** présente un exemple de mise en oeuvre, par un serveur, des étapes du procédé de diffusion d'identifiants de sources, selon un aspect de l'invention.

Lors d'une étape F1, le serveur 101 s'abonne au groupe multicast d'adresse aG en émettant vers le réseau 301 une demande d'abonnement précisant l'adresse aG du groupe multicast, sans exclure de source.

Lors d'une étape F2, le serveur 101 reçoit en provenance d'un client 20x un message d'annonce.

Si le message d'annonce est un message RTCP SDES, c'est à dire s'il est un message d'annonce d'arrivée d'un client dans le groupe multicast, le procédé passe à l'étape F3.

Si le message d'annonce est un message RTCP BYE, c'est à dire s'il est un message d'annonce de départ d'un client du le groupe multicast, le procédé passe à l'étape F10.

Lors d'une étape F3, le serveur obtient l'adresse du client 20x soit directement du message d'annonce reçu, soit d'un champ du paquet IP encapsulant le message d'annonce reçu.

Lors d'une étape F4, le serveur 101 vérifie dans sa table T101 de couples { identifiant ; adresse } si l'identifiant SSRCx compris dans le message RTCP SDES reçu n'est pas déjà présent en association avec une adresse IP différente d'IPx également comprise dans le message RTCP SDES reçu.

Si ce n'est pas le cas, le serveur ajoute le couple { SSRCx ; IPx } dans sa table lors d'une étape F5, et le procédé passe à l'étape F6.

Si c'est le cas, c'est à dire si le client 20x utilise un identifiant déjà pris par un autre client, le procédé passe directement à l'étape F6.

Lors d'une étape F6, le serveur 101 génère et émet à destination de l'adresse multicast aG un message RTCP SDES agrégé, comprenant les couples { addresse IP ; identifiant SSRC } de sa table T101. Ce message est donc diffusé aux clients du groupe multicast, et leur permet de vérifier leur propre identifiant pour éventuellement le modifier, et de se constituer leur propre table de couples { addresse IP ; identifiant SSRC }.

Lors d'une étape F10, le serveur 101 retire de sa table T101 de couples { identifiant ; adresse } celui correspondant à l'identifiant SSRCx compris dans le message RTCP BYE reçu. Par sécurité, dans une variante, le serveur peut, avant de retirer le couple, vérifier que le message RTCP BYE a bien été émis à partir de l'adresse IPx correspondant à l'identifiant SSRCx.

Lors d'une étape F11, le serveur 101 émet à destination de l'adresse multicast aG un message RTCP BYE, comprenant l'identifiant SSRCx. Ce message est donc diffusé aux clients du groupe multicast, et leur permet de de mettre à jour leur propre table de couples { addresse IP ; identifiant SSRC } en retirant le couple correspondant à l'identifiant SSRCx.

Dans une variante du procédé lorsque le message d'annonce est un message RTCP BYE, l'étape F2 est quand même suivie de l'étape F3 d'obtention de l'adresse du client ayant émis le message d'annonce, à partir d'un champ du paquet IP encapsulant le message d'annonce. Le procédé passe ensuite à l'étape F8.

Lors d'une étape F8, le serveur vérifie que l'identifiant de la source annonceuse est bien associé à l'adresse obtenue, dans sa table de couples T101 { identifiant de source ; adresse de source }. Si l'identifiant y est associé à une autre adresse que l'adresse obtenue, d'une part le couple n'est pas retiré de la table car le message d'annonce RTCP BYE est illégitime, et d'autre part le serveur émet, lors d'une étape F9, un message de gestion de type RTCP SDES comprenant l'identifiant et l'autre adresse.

Si l'identifiant y est associé à l'adresse obtenue le procédé passe à l'étape F10.

La **figure 4** présente un exemple de mise en oeuvre, par un client, des étapes du procédé de traitement d'identifiants de sources, selon un aspect de l'invention.

Lors d'une étape G1, le client 20x émet vers le réseau 301 une demande d'abonnement au groupe multicast d'adresse aG en précisant comme source l'adresse IP du serveur 101.

Lors d'une étape G2, le client 20x émet un message d'annonce d'arrivée RTCP SDES comprenant sont adresse IPx et l'identifiant SSRCx qu'il s'est attribué.

Lors d'une étape G3, le client 20x reçoit un message de gestion en provenance du serveur 101.

Si le message de gestion est un message RTCP SDES, comprenant un ou des couples { adresse IP ; identifiant SSRC } correspondant aux différentes sources du groupe multicast d'adresse aG, c'est à dire si le message est un message de gestion d'arrivée, le procédé passe à l'étape G4.

Si le message de gestion est un message RTCP BYE, comprenant un identifiant SSRCz correspondant à une source qui vient de quitter le groupe multicast d'adresse aG, c'est à dire si le message est un message de gestion de départ, le procédé passe à l'étape G10.

Lors d'une étape G4, le client 20x vérifie parmi les couples reçus son identifiant SSRCx n'est pas associé à une adresse IP autre que IPx.

Si ce n'est pas le cas, le client 20x ajoute les couples reçus à sa table T20x, lors d'une étape G5. Il se peut que des couples soient déjà compris dans la table ; le sens du terme "ajouter" est celui qui a pour effet que les couples compris dans le message reçu lors de l'étape G3 se retrouvent dans la table T20x.

Si c'est le cas, par contre, cela signifie que l'identifiant SSRCx a déjà été pris par un autre client avant le client 20x. Le client 20x modifie alors, lors d'une étape G6, son propre identifiant en SSRCy. Dans un mode alternatif, le procédé peut quand même effectuer l'étape G5 même s'il effectue l'étape G6, ce qui permet au client 20x d'avoir une table T20x à jour.

Après l'étape G6, lors d'une étape G7, le client 20x émet un nouveau message RTCP SDES comprenant sa propre adresse IPx et son identifiant multicast modifié SSRCy.

Les étapes G4 à G7 sont effectuées par le procédé lorsque le message d'annonce reçu par le client 20x lors de l'étape G3 est un message d'annonce d'arrivée.

Lorsque le message d'annonce reçu par le client 20x lors de l'étape G3 est un message d'annonce de départ, le procédé effectue à la place l'étape G10 suivante.

Lors d'une étape G10, le client 20x retire de sa table T20x le couple { identifiant de source ; adresse de source } correspondant à l'identifiant SSRCz, c'est à dire le couple { SSRCz ; IPz }.

En relation avec la **figure 5**, on présente maintenant un exemple de structure d'un dispositif de diffusion d'identifiants de sources, selon un aspect de l'invention.

Le dispositif 100 de diffusion d'identifiants de sources met en œuvre le procédé de diffusion d'identifiants de sources, dont différents modes de réalisation viennent d'être décrits.

Un tel dispositif 100 est mis en oeuvre dans un serveur multicast, tel que un serveur de TV, un serveur de jeux, de visioconférence ou bien encore un serveur de réseau de capteurs.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé de diffusion d'identifiants de sources selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module de réception 140, apte à recevoir en provenance d'un client d'un groupe multicast un message d'annonce d'arrivée ou de départ, comprenant respectivement un couple { identifiant de client ; adresse de client}, ou un identifiant de client,
- un module d'obtention 150, apte à obtenir l'adresse du client ayant émis le message d'arrivée ou de départ, à partir du message ou du paquet IP encapsulant le message,
- un module de vérification 160, apte à vérifier dans une table T100 de couples { identifiant de client ; adresse de client } que l'identifiant du client compris dans le message d'annonce n'est déjà pris par un autre client, si le message d'annonce est un message d'annonce d'arrivée,
- un module d'ajout 170, apte à ajouter dans la table T100 le couple { identifiant de client ; adresse de client} correspondant au client, si le message d'annonce est un message d'annonce d'arrivée,
- un module de retrait 180, apte à retirer de la table T100 le couple { identifiant de client ; adresse de client} correspondant au client, si le message d'annonce est un message d'annonce de départ,
- un module d'émission 190, apte à émettre un message de gestion à destination de l'adresse du groupe multicast, comprenant des couples de la table T100 en cas d'arrivée, ou l'identifiant du client annonceur en cas de départ.

En relation avec la **figure 6**, on présente maintenant un exemple de structure d'un dispositif de traitement d'identifiants de sources, selon un aspect de l'invention.

Le dispositif 200 de traitement d'identifiants de sources met en œuvre le procédé de traitement d'identifiants de sources, dont différents modes de réalisation viennent d'être décrits.

Un tel dispositif 200 peut être mis en oeuvre dans un terminal d'utilisateur, dit client récepteur, tel qu'un téléphone intelligent (smartphone), une tablette numérique, un ordinateur ou un capteur.

Par exemple, le dispositif 200 comprend une unité de traitement 230, équipée par exemple d'un microprocesseur µP, et pilotée par un programme d'ordinateur 210, stocké dans une mémoire 220 et mettant en œuvre le procédé de traitement d'identifiants de sources selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend :
- un module de réception 240, apte à recevoir en provenance d'un serveur d'un groupe multicast un message de gestion d'arrivée ou de départ, comprenant respectivement des couples { identifiant de client ; adresse de client}, ou un identifiant de client,
- un module de vérification 250, apte à vérifier dans les couples { identifiant de client ; adresse de client} reçus que l'identifiant du client récepteur n'est pris par un autre client, si le message de gestion est un message de gestion d'arrivée,
- un module d'ajout 260, apte à ajouter dans une table T200 les couples { identifiant de client ; adresse de client } reçus, si le message de gestion est un message de gestion d'arrivée,
- un module de modification 270, apte à modifier l'identifiant du client récepteur s'il est pris par un autre client, et si le message de gestion est un message de gestion d'arrivée,
- un module de retrait 280, apte à retirer de la table T200 le couple { identifiant de client ; adresse de client} correspondant à l'identifiant de client reçu, si le message de gestion est un message de gestion de départ,
- un module d'émission 290, apte à émettre à destination de l'adresse du groupe multicast un message d'annonce d'arrivée, comprenant le couple { identifiant modifié du client récepteur ; adresse du client récepteur}, si le message de gestion est un message de gestion d'arrivée.

Les modules décrits en relation avec les figures 5 et 6 peuvent être des modules matériels ou logiciels.

Les exemples de réalisation de l'invention qui viennent d'être présentés ne sont que quelques uns des modes de réalisation envisageables. Ils montrent que l'invention permet à une source d'un groupe de diffusion multicast bidirectionnel de savoir si son identifiant est unique immédiatement après s'être abonnée au serveur du groupe multicast, et de modifier son identifiant si c'est le cas. Ainsi, une dégradation de la qualité due au conflit entre sources utilisant le même identifiant est évitée. L'invention permet aussi à une source de connaître tous les identifiants et adresses IP des autres sources du groupe, sans avoir besoin de s'abonner à ces sources. Ainsi, il n'est plus nécessaire de récupérer l'adresse IP d'une source par un autre moyen pour s'y abonner.

## Revendications

1. **Procédé de diffusion** d'identifiants de sources d'un groupe de diffusion multicast de trafic RTP (G), lesdites sources étant connectées entre elles au travers d'un réseau de communications électroniques (301),
le groupe de diffusion multicast étant identifié par une adresse de groupe,
un flux émis à destination de l'adresse de groupe par une première source étant reçu par une seconde source si la seconde source est préalablement abonnée à la première source, la seconde source annonçant un identifiant de type SSRC qu'elle s'est attribué, dit identifiant de source, en s'abonnant à la première source,
une des sources, dite serveur (101), étant abonnée à toutes les autres sources (201, 202, 20x), et comprenant une table de couples { identifiant de source ; adresse de source },
le procédé comprenant les étapes suivantes mises en œuvre par le serveur:
• réception (E610, E620, E620bis, E801, F2), en provenance d'une desdites autres sources, appelée source annonceuse (201, 202), d'un message d'annonce multicast comprenant un identifiant de source et une adresse de la source annonceuse,
• émission (E612, E622, E622bis, E804, F6, F9, F11) d'un message de gestion, à destination de l'adresse de groupe, comprenant un couple comprenant l'identifiant de la source annonceuse, et une adresse qui est, dans le cas où l'identifiant est déjà associé dans la table avec une autre adresse que celle de la source annonceuse, cette autre adresse (E621), ou qui est, dans le cas contraire, l'adresse de la source annonceuse (E611).

2. **Procédé de diffusion** d'identifiants selon la revendication 1, selon lequel, lorsque le message d'annonce multicast reçu lors de l'étape de réception comprend une information d'arrivée de la source annonceuse dans le groupe multicast,
l'étape de réception est suivie des étapes suivantes:
• obtention (F3) d'une adresse de la source annonceuse, extraite du message d'annonce reçu,
• vérification (E611, E621, E621bis, F4) de la présence de l'identifiant de la source annonceuse dans la table ,
• en cas de vérification négative, ajout (F5) d'un couple { identifiant de la source annonceuse ; adresse de la source annonceuse} dans la table,
et le message de gestion émis lors de l'étape d'émission comprend au moins un couple de la table, comprenant l'identifiant de source annonceuse.

3. **Procédé de diffusion** d'identifiants selon la revendication 1, selon lequel, lorsque le message d'annonce multicast comprend une information de départ de la source annonceuse du groupe multicast,
l'étape de réception est suivie d'une étape de retrait (E803, F10), dans table de couples { identifiant de source ; adresse de source }, du couple correspondant à l'identifiant de la source annonceuse.

4. **Dispositif de diffusion** d'identifiants de sources d'un groupe de diffusion multicast de trafic RTP (G), lesdites sources étant connectées entre elles au travers d'un réseau de communications électroniques (301),
le groupe de diffusion multicast étant identifié par une adresse de groupe,
un flux émis à destination de l'adresse de groupe par une première source étant reçu par une seconde source si la seconde source est préalablement abonnée à la première source, la seconde source annonçant un identifiant de type SSRC qu'elle s'est attribué, dit identifiant de source, en s'abonnant à la première source,
une des sources, dite serveur (101), étant abonnée à toutes les autres sources (201, 202, 20x), et comprenant une table de couples { identifiant de source ; adresse de source },
le dispositif étant mis en œuvre dans le serveur et comprenant :
• un module de réception (140), en provenance d'une desdites autres sources, appelée source annonceuse, d'un message d'annonce multicast comprenant un identifiant de source et une adresse de la source annonceuse,
• un module d'émission (190) d'un message de gestion, à destination de l'adresse de groupe, comprenant un couple comprenant l'identifiant de la source annonceuse, et une adresse qui est, dans le cas où l'identifiant est déjà associé dans la table avec une autre adresse que celle de la source annonceuse, cette autre adresse, ou qui est, dans le cas contraire, l'adresse de la source annonceuse.

5. Serveur d'un groupe de diffusion multicast, le serveur étant connecté à un réseau de communications électroniques et comprenant un dispositif de diffusion d'identifiants de sources selon la revendication 4.

6. **Groupe de diffusion multicast** comprenant un serveur selon la revendication 5 et au moins deux autres sources du groupe de diffusion multicast, dits équipements clients.

7. **Programme d'ordinateur, caractérisé en ce qu'**il comprend des instructions pour la mise en œuvre des étapes du procédé de diffusion d'identifiants de sources selon la revendication 1, lorsque ce procédé est exécuté par un processeur.

8. **Support d'enregistrement**, lisible par un serveur, sur lequel est enregistré le programme selon la revendication 7.

## Patentansprüche

1. Verfahren zur Verbreitung von Kennungen von Quellen einer RTP-Traffic-Multicast-Verbreitungsgruppe (G), wobei die Quellen über ein elektronisches Kommunikationsnetz (301) miteinander verbunden sind,
wobei die Multicast-Verbreitungsgruppe durch eine Gruppenadresse, gekennzeichnet ist,
wobei ein von einer ersten Quelle an die Gruppenadresse gesendeter Fluss von einer zweiten Quelle empfangen wird, wenn die zweite Quelle vorher bei der ersten Quelle abonniert wird, wobei die zweite Quelle eine Kennung des Typs SSRC, Quellenkennung genannt, die sie sich zugewiesen hat, meldet, indem sie sich bei der ersten Quelle abonniert,
wobei eine der Quellen, Server (101) genannt, bei allen anderen Quellen (201, 202, 20x) abonniert ist und eine Paare-Tabelle {Quellenkennung; Quellenadresse} enthält,
wobei das Verfahren die folgenden Schritte enthält, die vom Server durchgeführt werden:
• Empfang (E610, E620, E620bis, E801, F2), von einer der anderen Quellen, meldende Quelle genannt (201, 202), kommend, einer Multicast-Meldenachricht, die eine Quellenkennung und eine Adresse der meldenden Quelle enthält,
• Senden (E612, E622, E622bis, E804, F6, F9, F11) einer Verwaltungsnachricht an die Gruppenadresse, die ein Paar enthält, das die Kennung der meldenden Quelle und eine Adresse enthält, die, wenn die Kennung bereits in der Tabelle einer anderen Adresse als derjenigen der meldenden Quelle zugeordnet ist, diese andere Adresse (E621) ist, oder die im gegenteiligen Fall die Adresse der meldenden Quelle (E611) ist.

2. Verfahren zur Verbreitung von Kennungen nach Anspruch 1, gemäß dem, wenn die im Empfangsschritt empfangene Multicast-Meldenachricht eine Ankunftsinformation der meldenden Quelle in der Multicast-Gruppe enthält,
auf den Empfangsschritt die folgenden Schritte folgen:
• Erhalt (F3) einer Adresse der meldenden Quelle, entnommen aus der empfangenen Meldenachricht,
• Überprüfung (E611, E621, E621bis, F4) des Vorhandenseins der Kennung der meldenden Quelle in der Tabelle,
• im Fall einer negativen Überprüfung, Hinzufügung (F5) eines Paars {Kennung der meldenden Quelle; Adresse der meldenden Quelle} in die Tabelle,
und die im Sendeschritt gesendete Verwaltungsnachricht mindestens ein Paar der Tabelle enthält, das die Kennung der meldenden Quelle enthält.

3. Verfahren zur Verbreitung von Kennungen nach Anspruch 1, gemäß dem, wenn die Multicast-Meldenachricht eine Information des Austritts der meldenden Quelle aus der Multicast-Gruppe enthält, auf den Empfangsschritt ein Entnahmeschritt (E803, F10) in der Paare-Tabelle {Quellenkennung; Quellenadresse} des Paars folgt, das der Kennung der meldenden Quelle entspricht.

4. Vorrichtung zur Verbreitung von Kennungen von Quellen einer RTP-Traffic-Multicast-Verbreitungsgruppe (G), wobei die Quellen über ein elektronisches Kommunikationsnetz (301) miteinander verbunden sind,
wobei die Multicast-Verbreitungsgruppe durch eine Gruppenadresse, gekennzeichnet ist,
wobei ein von einer ersten Quelle an die Gruppenadresse gesendeter Fluss von einer zweiten Quelle empfangen wird, wenn die zweite Quelle vorher bei der ersten Quelle abonniert wird, wobei die zweite Quelle eine Kennung des Typs SSRC, Quellenkennung genannt, die sie sich zugewiesen hat, meldet, indem sie sich bei der ersten Quelle abonniert,
wobei eine der Quellen, Server (101) genannt, bei allen anderen Quellen (201, 202, 20x) abonniert ist und eine Paare-Tabelle {Quellenkennung; Quellenadresse} enthält,
wobei die Vorrichtung im Server angewendet wird und enthält:
• ein Modul zum Empfang (140), von einer der anderen Quellen, meldende Quelle genannt, einer Multicast-Meldenachricht, die eine Quellenkennung und eine Adresse der meldenden Quelle enthält,
• ein Modul zum Senden (190) einer Verwaltungsnachricht an die Gruppenadresse, die ein Paar enthält, das die Kennung der meldenden Quelle und eine Adresse enthält, die, wenn die Kennung bereits in der Tabelle einer anderen Adresse als derjenigen der meldenden Quelle zugeordnet ist, diese andere Adresse ist, oder die im gegenteiligen Fall die Adresse der meldenden Quelle ist.

5. Server einer Multicast-Verbreitungsgruppe, wobei der Server mit einem elektronischen Kommunikationsnetz verbunden ist und eine Vorrichtung zur Verbreitung von Quellenkennungen nach Anspruch 4 enthält.

6. Multicast-Verbreitungsgruppe, die einen Server nach Anspruch 5 und mindestens zwei weitere Quellen der Multicast-Verbreitungsgruppe enthält, Client-Ausrüstungen genannt.

7. Computerprogramm, **dadurch gekennzeichnet, dass** es Anweisungen zur Durchführung der Schritte des Verfahrens zur Verbreitung von Quellenkennungen nach Anspruch 1 enthält, wenn dieses Verfahren von einem Prozessor ausgeführt wird.

8. Aufzeichnungsträger, lesbar von einem Server, auf dem das Programm nach Anspruch 7 aufgezeichnet ist.

## Claims

1. **Method for distributing** identifiers of sources of a multicast distribution group for RTP traffic (G), said sources being connected together through an electronic communications network (301),
the multicast distribution group being identified by a group address,
a stream sent to the group address by a first source being received by a second source if the second source is previously a subscriber to the first source, the second source announcing an identifier of SSRC type that it allocated to itself, the so-called source identifier, when subscribing to the first source,
one of the sources, the so-called server (101), being a subscriber to all the other sources (201, 202, 20x), and comprising a table of pairs { source identifier; source address },
the method comprising the following steps implemented by the server:
• reception (E610, E620, E620bis, E801, F2), originating from one of said other sources, called the announcer source (201, 202), of a multicast announcement message comprising a source identifier and an address of the announcer source,
• sending (E612, E622, E622bis, E804, F6, F9, F11) of a management message, to the group address, comprising a pair comprising the identifier of the announcer source, and an address which is, in the case where the identifier is already associated in the table with an address other than that of the announcer source, this other address (E621), or which is, in the converse case, the address of the announcer source (E611).

2. **Method for distributing** identifiers according to Claim 1, according to which, when the multicast announcement message received during the reception step comprises an item of information regarding arrival of the announcer source in the multicast group,
the reception step is followed by the following steps:
• obtaining (F3) of an address of the announcer source, extracted from the announcement message received,
• verification (E611, E621, E621bis, F4) of the presence of the identifier of the announcer source in the table,
• in case of negative verification, addition (F5) of a pair { identifier of the announcer source; address of the announcer source } to the table,
and the management message sent during the sending step comprises at least one pair of the table, comprising the identifier of the announcer source.

3. **Method for distributing** identifiers according to Claim 1, according to which, when the multicast announcement message comprises an item of information regarding departure of the announcer source from the multicast group,
the reception step is followed by a step of removal (E803, F10), in the table of pairs { source identifier; source address }, of the pair corresponding to the identifier of the announcer source.

4. **Device for distributing** identifiers of sources of a multicast distribution group for RTP traffic (G), said sources being connected together through an electronic communications network (301),
the multicast distribution group being identified by a group address,
a stream sent to the group address by a first source being received by a second source if the second source is previously a subscriber to the first source, the second source announcing an identifier of SSRC type that it allocated to itself, the so-called source identifier, when subscribing to the first source,
one of the sources, the so-called server (101), being a subscriber to all the other sources (201, 202, 20x), and comprising a table of pairs { source identifier; source address },
the device being implemented in the server and comprising:
• a module for receiving (140), originating from one of said other sources, called the announcer source, a multicast announcement message comprising a source identifier and an address of the announcer source,
• a module for sending (190) a management message, to the group address, comprising a pair comprising the identifier of the announcer source, and an address which is, in the case where the identifier is already associated in the table with an address other than that of the announcer source, this other address, or which is, in the converse case, the address of the announcer source.

5. **Server** of a multicast distribution group, the server being connected to an electronic communications network and comprising a device for distributing identifiers of sources according to Claim 4.

6. **Multicast distribution group** comprising a server according to Claim 5 and at least two other sources of the multicast distribution group, the so-called client items of equipment.

7. **Computer program, characterized in that** it comprises instructions for the implementation of the steps of the method for distributing identifiers of sources according to Claim 1, when this method is executed by a processor.

8. **Recording medium**, readable by a server, on which the program according to Claim 7 is recorded.
